# EUROPÄISCHE PATENTANMELDUNG

(11) **EP 1 842 761 A2**
(43) Veröffentlichungstag der Anmeldung: **10.10.2007**
(21) Anmeldenummer: 07007036.2
(22) Anmeldetag: 04.04.2007
(51) Int. Cl.: B62D 1/04

(54) **Drucksensibles Lenkrad für Kraftfahrzeuge**

(30) Priorität: 04.04.2006 DE 202006005593 U
(71) Anmelder: MöllerTech GmbH, 33649 Bielefeld (DE)
(72) Erfinder: Neumann-Semerow, Hans-Harro, 65191 Wiesbaden (DE); Beckmann, Andreas, 33611 Bielefeld (DE)
(74) Vertreter: Bittner, Thomas L.

(57) **Zusammenfassung**

Die Erfindung betrifft ein drucksensibles Lenkrad für Kraftfahrzeuge zur Erfassung des auf das Lenkrad ausgeübten Anfaßdrucks durch den Fahrer, wobei die Anordnung eines kapazitiven Näherungsschalters mit zugeordneter Elektrode vorgesehen ist.

## Beschreibung

Die Erfindung betrifft ein drucksensibles Lenkrad für Kraftfahrzeuge zur Erfassung des auf das Lenkrad ausgeübten Anfaßdrucks durch den Fahrer.

Es ist nicht selten, daß durch Ermüdungserscheinungen oder Sekundenschlaf des Fahrers die Beherrschung über das Fahrzeug verloren geht, wobei keine Lenkbewegung erfolgt und die Berührung des Lenkrads nachläßt oder sogar ganz verloren geht. Es sind bereits verschiedene Lösungen bekannt, die bei Eintreten dieser Situation den Fahrer des Kraftfahrzeuges warnen.

Im spanischen Gebrauchsmuster 1 060 283 wird ein Lenkrad beschrieben, bei dem der Lenkradkranz mit einem oder mehreren Kabel(n) versehen ist, in dem/denen zwei metallische Drähte integriert sind, die sich bei Druckbeanspruchung berühren und damit einen elektrischen Schaltkontakt auslösen. Diese Schaltung ist nicht sensibel für unterschiedliche Druckkräfte, da lediglich ein Ein-/Auskontakt ausgelöst wird. Da überwiegend bei allen Fahrzeugen Airbagsysteme im Lenkrad integriert sind, können in diesem Bereich keine Kabel angebracht werden und schließen somit eine Erfassung dieses Bereiches aus. Außerdem erfordert die Integration von Kabeln die Anbringung von Nuten oder Lochelementen, was zu einer Schwächung führt und bei der Festigkeitsauslegung berücksichtigt werden muß.

Aus dem spanischen Gebrauchsmuster 1 059 134 ist ein Lenkrad bekannt, bei dem an verschiedenen Stellen Sensoren angebracht sind. Als Sensoren kommen Kontaktsensoren zum Einsatz, dies sind Sensoren, welche nur den unmittelbaren Kontakt oder Nicht-Kontakt der Hände an den Sensoren erfassen können. Eine Messung von Druckunterschieden ist nicht möglich. Damit ist ein zuverlässiges und frühzeitiges Erkennen einer abnehmenden Griffigkeit infolge von Ermüdung nicht möglich. Diese Sensoren müssen weiterhin über die gesamte Oberfläche des Lenkradkörpers verteilt sein und schränken das Design ein. Die Sensoren können auch nur an den Stellen wirken, an denen sie angebracht sind. Auch hier schließt sich die Anwendung der Sensoren im Bereich der Airbagklappen aus.

In der deutschen Offenlegungsschrift DE 100 27 922 A1 beziehungsweise in der europäischen Patentschrift EP 1 292 485 B1 wird ein Lenkrad beschrieben, welches mit einer Vielzahl von Sensoren bestückt ist, die am Umfang des Lenkrads verteilt sind und Segmente bilden, die die Position der Hände am Lenkrad und somit das Lenkverhalten des Fahrers erfassen sollen, um den Fahrer eine optimale Griffposition vorzugeben. Die Vielzahl der Einzelsensoren führt dazu, dass jeder Sensor einzeln verkabelt werden muss und somit eine Vielzahl an Anschlusskabeln am Lenkrad zu installieren sind.

Um eine weiche Griffigkeit des Lenkrades zu gewährleisten, wird das Dekormaterial beispielsweise Kunstleder oder Leder, mit Schaumstoff hinterflittert, was wiederum zu einer Veränderung der Drucksensibilität für die Reaktion der Sensoren führt. Wird das Lenkrad nur leicht berührt, kann dies dazu führen, dass kein Impuls erfolgt und dieses zu einer Fehlreaktion im Schaltkreis führt.

Der Erfindung liegt die Aufgabe zugrunde, ein drucksensibles Lenkrad für Kraftfahrzeuge zu schaffen, das mit einem Minimum an Aufwand an allen Stellen der Lenkradoberfläche den Anfaßdruck des Fahrers erfaßt.

Diese Aufgabe wird erfindungsgemäß durch die Anordnung eines kapazitiven Näherungsschalters mit zugeordneter Elektrode gelöst, wobei die Elektrode durch den Lenkradkern gebildet sein kann. Es besteht auch die Möglichkeit, die Elektrode unter dem Lenkradobermaterial anzuordnen. Durch den Näherungsschalter ist bei Unterschreitung eines vorbestimmten Anfaßdrucks am Lenkrad ein Schaltsignal auslösbar.

Vorteilhafterweise kann das Schaltsignal ab einem Abstand zwischen den Händen des Fahrers und dem Lenkrad von ca. 40 mm auslösbar sein.

In Ausgestaltung der Erfindung ist dem Näherungsschalter ein Einstellpotentiometer zugeordnet. Durch das Einstellpotentiometer ist die Druckempfindlichkeit des Näherungsschalters einstellbar. Bei einer bevorzugten Ausführung der Erfindung ist der zeitabhängige Anfaßdruck des Fahrers am Lenkrad erfaßbar und in einem zugeordneten Datenerfassungssystem speicherbar.

In einer weiteren vorteilhaften Ausführung kann der kapazitive Näherungsschalter an einem lernfähigen System angeschlossen sein, mit dem eine Selbstoptimierung der Schaltschwelle nach der Lernphase, z.B. nach einigen Betriebsminuten, erfolgt. Somit kann sich ein solches System an verschiedene Fahrer anpassen, z.B . nach Geschlecht, Größe der Handflächen, Hautfeuchtigkeit etc. Auch die Abnutzung des Dekormaterials und diverse Umgebungseinflüsse, wie Temperatur und Luftfeuchtigkeit im Kraftfahrzeuginnenraum können mit berücksichtigt werden, welche letztendlich einen Einfluss auf die Kapazität des Näherungsschalters haben. Da in der Regel nur ein Anschlusskabel zum metallischen Lenkradkern benötigt wird, kann dieses an einer gut zugänglichen Stelle angebracht werden.

Durch die erfindungsgemäße Ausbildung kann in allen Bereichen der Oberfläche des Lenkrades die Intensität der Berührung auch bei einer weichen Lenkradbeschichtung wahrgenommen werden. In Abhängigkeit von der Griffkraft des Fahrers kann ein Schaltsignal, beispielsweise ein akustisches Alarmsignal unterschiedlicher Stärke, ausgelöst werden. Mit abnehmender Griffkraft fällt dieses akustische Alarmsignal entsprechend lauter aus und kann bei fehlender Griffkraft einen lauten Dauerton auslösen, wenn im Fahrzeugbetrieb eine bestimmte Geschwindigkeit überschritten ist.

Durch den Einstellpotentiometer kann die Empfindlichkeit der Schaltschwelle eingestellt werden und infolge des unterschiedlichen Druckkontakts mit der Oberfläche des Lenkrades ein unterschiedlicher Impuls ausgelöst werden. Durch Erfassung des zeitabhängigen Anfaßdrucks des Fahrers und Speicherung dieser Daten in einer zugeordneten Vorrichtung (Blackbox) kann zum Beispiel nach einem Unfall eine Auswertung dieser Daten erfolgen.

## Patentansprüche

1. Drucksensibles Lenkrad für Kraftfahrzeuge zur Erfassung des auf das Lenkrad ausgeübten Anfaßdrucks durch den Fahrer, **gekennzeichnet durch** die Anordnung eines kapazitiven Näherungsschalters mit zugeordneter Elektrode.

2. Drucksensibles Lenkrad nach Anspruch 1, **dadurch gekennzeichnet, daß** die Elektrode durch den metallischen Lenkradkern gebildet ist.

3. Drucksensibles Lenkrad nach Anspruch 1, **dadurch gekennzeichnet, daß** die Elektrode unter dem Lenkradobermaterial angeordnet ist.

4. Drucksensibles Lenkrad nach einem der Ansprüche 1 bis 3, **dadurch gekennzeichnet, daß** durch den Näherungsschalter bei Unterschreitung eines vorbestimmten Anfaßdrucks durch den Fahrer am Lenkrad ein Schaltsignal auslösbar ist.

5. Drucksensibles Lenkrad nach einem der Ansprüche 1 bis 4, **dadurch gekennzeichnet, daß** das Schaltsignal ab einem Abstand zwischen den Händen des Fahrers und dem Lenkrad von ca. 40 mm auslösbar ist.

6. Drucksensibles Lenkrad nach einem der Ansprüche 1 bis 5, **dadurch gekennzeichnet, daß** dem Näherungsschalter ein Einstellpotentiometer zugeordnet ist.

7. Drucksensibles Lenkrad nach Anspruch 6, **dadurch gekennzeichnet, daß** durch das Einstellpotentiometer die Druckempfindlichkeit des Näherungsschalters einstellbar ist.

8. Drucksensibles Lenkrad nach einem der Ansprüche 1 bis 7, **dadurch gekennzeichnet, daß** der zeitabhängige Anfaßdruck des Fahrers am Lenkrad erfaßbar und in einem zugeordneten Datenerfassungssystem speicherbar ist.

9. Drucksensibles Lenkrad nach einem der Ansprüche 1 bis 8, **dadurch gekennzeichnet, daß** der Näherungsschalter an ein lernfähiges System angeschlossen ist.
